# EUROPEAN PATENT APPLICATION

(11) **EP 4 545 227 A1**
(43) Date of publication of application: **30.04.2025**
(21) Application number: 23205318.1
(22) Date of filing: 23.10.2023
(51) Int. Cl.: B23B 41/00, B23B 39/16

(54) **A DRILLING SYSTEM**

(71) Applicant: No More Boots AB, 831 33 Östersund (SE)
(72) Inventor: ANDERSSON, Fredrik, 837 95 Undersåker (SE); GRANBERG, Markus, 835 41 Dvärsätt (SE); ARVIDSSON, Oscar, 831 52 Östersund (SE)
(74) Representative: AWA Sweden AB

(57) **Abstract**

There is disclosed herein a drilling system (1) comprising a drilling drive assembly (10) comprising a drill bit (4). The drilling system further comprises a supporting pillar (20) comprising a support drive unit (22). The support drive unit drives the drilling drive assembly in a primary axial movement, between a start position and an end position. The drilling system further comprises at least one biasing means (30) arranged to bias the drilling drive assembly towards an initial position, a detection means (40) configured to detect if the drilling drive assembly is in the initial position, and a control unit (50) configured to control the support drive unit, such that the drilling of the hole in the object is finished when the drilling drive assembly has reached the end position and is detected in the initial position. The present disclosure further relates to a ski drilling arrangement and a method.

## Description

### Technical field

The present disclosure generally relates to a drilling system for drilling in an object and to a method for using said drilling system. The present disclosure further generally relates to a ski drilling arrangement for drilling holes to mount a binding to a ski or a snowboard.

### Background

Drilling holes with a drilling machine is a fundamental machining operation that plays an important role in many manufacturing and construction processes. It allows for an accurate and controlled process for creating a hole, making it an essential tool in various industries. In many applications the precision of the machine is crucial for that industry.

In, for example, the industry of drilling holes for bindings in skis and snowboards the precision of the drilling machine is a vital part of mounting the binding in a way such that a proper binding placement is achieved. The binding placement is critical for the skier's safety and performance, as it affects his/her balance, control, and the release of the bindings in case of a fall.

Today the ski drillings machines may for example be programmed such that the drill bit is positioned according to the calculated mounting points. The use of robotic arms or automated mechanisms ensures that the holes are drilled accurately and consistently. However, a problem with these kinds of drilling machines is that the machines are not redundant to errors and problems with the precision and result may occur when drilling in harder materials.

Therefore, a more redundant drilling machine is required.

### Summary

In view of the above, it is an object of the present disclosure to provide an improved drilling system for drilling in an object. It is also an object of the present disclosure to provide a drilling system that is more redundant and is able to operate reliably in hard materials with a high precision in where the drilling machine drills as well as in how deep the resulting hole is.

A further object is to provide an improved method for drilling in an object and an improved ski drilling arrangement.

To achieve at least one of the above objects, and also other objects that will be evident from the followings description, a drilling system for drilling in an object is provided according to the present disclosure. Preferred variants of the drilling system will be evident from the dependent claims.

More specifically, there is provided, according to a first aspect of the present disclosure, a drilling system for drilling in an object. The drilling system comprises a drilling drive assembly comprising a holder for holding a drill bit and a drive unit for rotating the drill bit. The drilling system further comprises a supporting pillar comprising a support drive unit. The drilling drive assembly is moveably attached to the supporting pillar. The support drive unit is configured to drive the drilling drive assembly towards and away from the object in a primary axial movement, between a start position and an end position. The drilling system further comprises at least one biasing means arranged to bias the drilling drive assembly towards an initial position. The drilling drive assembly is supported to be additionally movable in a secondary axial movement away from the initial position against a biasing force generated by said at least one biasing means, and back to the initial position by means of the biasing force. The drilling system further comprises a detection means configured to detect if the drilling drive assembly is in the initial position or not, and to thereby detect that the drill bit reaches an upper surface of the object, and a control unit connected to the detection means and configured to control the support drive unit, such that the drilling of the hole in the object is finished when the drilling drive assembly has reached the end position and is detected in the initial position.

According to a second aspect of the present disclosure a ski drilling arrangement for drilling holes to mount a binding to a ski or a snowboard is provided. The ski drilling arrangement comprises at least one drilling system according to the first aspect, a support frame configured to hold the supporting pillar of said at least one drilling system and to, together with the supporting pillar, allow movement of said at least one drilling system in two dimensions, wherein the movement by the drilling drive assembly is in a third dimension. The ski drilling arrangement further comprises a control system configured to control the movement of said at least one drilling system along the support frame.

According to a third aspect of the present disclosure a method for operating a drilling system is provided. The drilling system comprises a drilling drive assembly comprising a holder for holding a drill bit and a drive unit for rotating the drill bit. The drilling system further comprises a supporting pillar comprising a support drive unit. The drilling drive assembly is moveably attached to the supporting pillar. The support drive unit is configured to drive the drilling drive assembly towards and away from the object in a primary axial movement, between a start position and an end position. The drilling system further comprises at least one biasing means arranged to bias the drilling drive assembly towards an initial position, The method comprises moving the drilling drive assembly axially towards the object in the primary axial movement, when hitting the object, allowing the drilling drive assembly to move, in a secondary axial movement, against the biasing force away from an initial position, and drilling to a predetermined axial depth into the object, and returning the drilling drive assembly to the initial position by means of the biasing force.

When drilling in an object the support drive unit forces the drilling drive assembly towards the object, thereby providing the primary axial movement. The drilling drive assembly is movable along the supporting pillar by the support drive unit providing the primary axial movement towards and away from the object. As the drill bit rotates it will cut a hole into the object and as the support drive unit forces the drilling drive assembly further along the primary axial movement, the hole will be deeper. The support drive unit usually forces the drilling drive assembly a predetermined distance along the supporting pillar. However, as realized by the inventors, in the prior art a problem may occur when the support drive unit forces the drilling drive assembly downward in the primary axial movement faster than the drill bit is able to drill or cut in the material. This kind of problem usually appears in harder materials. In such case, the drill bit may not be able to drill the desired depth into the object even if the support drive unit has forced the drilling drive assembly to the predetermined distance, for instance due to slip in the motor. One way of solving this problem may be to lower the velocity at which the support drive unit forces the drilling drive assembly. However, if the velocity is set below the possible velocity there may be a loss in efficiency of the drilling system. The hardness of the objects may vary in an unknown manner, and it may therefore be challenging to set an optimal speed which fits all objects. The hardness of the different material may be unknown.

By providing the biasing means such that the drilling drive assembly is supported to be additionally axial moveable, in the secondary axial movement, against the biasing force of the biasing means, the drilling drive assembly is allowed to move against the biasing force if the drill bit is not able to drill fast enough. This may reduce the forces applied to the drill bit and therefore reduce the wear on the drill bit as the drill bit is allowed to perform its cutting rotation at its own pace instead of being pressed into the material. Further, with the biasing means allowing the drilling drive assembly to move in the secondary axial movement against the biasing force, the drilling drive assembly is allowed to move in the secondary axial movement if the drill bit is not able to cut into the object quick enough. This reduces the stress of the drilling system as the drilling system is built for a cutting motion which cuts into the object and not forces into it. Said at least one biasing means may be at least one spring.

As an example, in the terms of the ski drilling arrangement, when the drill bit hits the ski and the drill bit is able to cut into the ski in the velocity set by the support drive unit, the drilling drive assembly will stay in its initial position during the full drill process, except for a brief moment when the drill bit hits the surface of the object. However, if the drill bit is not able to cut into the material at the velocity set by the support drive unit, the support drive unit will keep forcing the drilling drive assembly, and hence the drill bit, towards the object and a force counteracting the biasing force will appear. This results in that the drilling drive assembly is moved in the secondary axial movement away from the initial position against the biasing force which allows the drill bit to cut into the material of the ski at the available speed of the drill bit. When the support drive unit has driven the drilling drive assembly to the end position of the primary axial movement, the drill bit is allowed to drill the distance which the drill bit had not been able to cut during the time the drilling drive assembly was forced from the initial position. The biasing force forces the drilling drive assembly back to the initial position. Therefore, the drilling system allows for a higher precision hole with a higher redundancy, where an erroneous depth of the hole is avoided.

To ensure that the desired depth of the hole is reached, the drilling system is provided with the detection means and the control unit. By detecting if the drilling drive assembly is in the initial position the control unit is able to know when the drill bit hits the upper surface of the object. When the drill bit hits the upper surface of the object there will be a small movement of the drilling drive assembly which the detection means is able to detect. Thereby, a drilling depth may be set on basis of when the drill bit hits the object instead of merely driving the drilling drive assembly a predetermined length of primary axial movement. In other words, the end position of the primary axial movement is set on basis of the contact made by the drill bit with the upper surface of the object. This allows for more precise drilling depth. Further, if the drilling drive assembly is dislocated from the initial position, the control unit is able to secure both that the drilling drive assembly has reached the end position in its primary axial movement and that the drilling drive assembly has not moved from the initial position, i.e., the secondary axial movement is back at the starting position. As an example, if the ski drilling arrangement is using the drilling system for drilling the hole for mounting a binding to a ski or snowboard the drilling depth affect how the binding is mounted as well as the stability of the ski. In other words, increased precision when drilling is advantageous to produce a ski with better quality and higher safety.

The secondary axial movement is independent of the primary axial movement. The primary axial movement is based on the support drive unit and how the support drive unit drive the drilling drive assembly towards the object. The secondary axial movement is based on a counteracting force that counteracts the biasing force of the biasing means. The counteracting force may be due to that the primary axial movement is faster than the drill bit is able to drill.

Drilling may be seen as a cutting process where the drill bit cuts into the object to obtain a hole.

The control unit may be configured to reset an axial coordinate when the drilling drive assembly first is moved from the initial position.

This allows the control unit to reset the axial coordinate, or the full coordinate system, based on this contact, which reduces the risk of measurement faults. When the axial coordinate is reset to zero at the contact point of the object, the precision of the predetermined depth may be improved. The reset of the axial coordinate may be advantageous when drilling in skis as the ski often has an arched shape. The reset of the axial coordinate allows for a more precise hole in the ski. The provision of the detection means allows for an advantageous method for resetting the axial coordinate. The detection means may comprise a micro switch.

The control unit may be programmable such that the control unit is arranged to operate the drilling drive assembly to obtain a preset axial drilling depth. By programming the control unit such that it drills a preset axial drilling depth a better control of the drilling process may be achieved. In such case it may be possible to set the preset axial drilling depth, i.e., the predetermined drilling depth, rendering the desired depth of the drilled hole, and then the control unit operates the drilling drive assembly such that the drilling depth is achieved. Combining this feature with the reset of the axial coordinate discussed above, may allow for a further precise control of the drilling depth.

The support drive unit may comprise a stepper motor or a servo motor. As a further alternative, the support drive unit may comprise an electrical motor. The biasing suspension of the drilling drive assembly may be especially advantageous when combined with a stepper motor. The stepper motor is often used due to the low price. The stepper motor uses a predetermined number of steps to reach the drilling depth and if the stepper motor skips a step the resulting drilling depth may not be as deep as desired. The stepper motor may skip a step if the drill bit is not able to cut into the object fast enough. However, with the biasing means the drilling drive assembly will instead be forced against the biasing force and the stepper motor may be able to perform all the steps and thereafter the drill bit is able to cut its way into the object such that the predetermined drilling depth may be achieved, and the drilling drive assembly is returned to its initial position.

The drilling system may further comprise a hollow outer casing arranged around the drilling drive assembly. The drilling drive assembly may be moveably attached to the supporting pillar via the outer casing. The drilling drive assembly may be attached to a first end of the outer casing by said at least one biasing means, such that the secondary axial moveability is provided in relation to the outer casing.

The hollow outer casing may be provided around the drillings drive assembly, such that the drilling drive assembly is partly enclosed by the outer casing. By providing said at least one biasing means at a first end of the outer casing, said at least one biasing means may be protected by the outer casing. When the drilling drive assembly is attached to the outer casing a convenient construction for providing the secondary axial moveability is achieved. As an example, the drilling drive assembly may be suspended by at least one spring at the first end of the outer casing.

The secondary axial movement of the drilling drive assembly may be detected in relation to the hollow outer casing. This provides the possibility to detect the secondary axial movement between the drilling drive assembly and the outer casing to reset the axial coordinate or the reference system.

The outer casing may comprise a rim at a second end from which the holder of the drilling drive assembly protrudes. The drilling drive assembly may be arranged to be supported by the rim in the initial position and biased towards the rim while being movable towards the first end away from the rim.

The rim provides the drilling drive assembly with support such that the drilling drive assembly rests against the rim in the initial position. When the drill bit touches the object, the biasing force may keep forcing the drilling drive assembly towards the rim. Further, the detection means, for example a contact sensor, may be used to measure the secondary axial movement of the drilling drive assembly. As an example, the detecting means may be configured to detect when the drilling drive assembly loses contact with the rim and therefore is considered not to be in the initial position.

The at least one drilling system of the drilling arrangement according to the second aspect may comprise a first and a second drilling system having different drill bits. The first and second drilling system may also have the same drill bit.

It may be advantageous with a drilling arrangement having more than one drilling system as this may allow the drilling systems of the drilling arrangement to work in parallel. For example, if the first and second drilling system have the same size on the drill bit, the drilling systems may operate simultaneously such that the first drilling system drills at a first ski and the second drilling system drills at a second ski, or such that the first and second drilling system drill at the same ski but different holes. If the first and the second drilling systems have different drill bits, the need of changing drill bit for different sizes of holes is reduced. For example, there may be two types of standards for holes when drilling in the ski and by having two drilling systems with drill bits that fit for one standard each may reduce the time needed to change between the two different standards.

Each drill bit may be at most 12 mm.

Effects and features of the second aspect and the third aspect may be largely analogous to those described above in connection with the first aspect. Embodiments mentioned in relation to the first aspect may be at least largely compatible with the second aspect and the third aspect. It is further noted that the present disclosure relates to all possible combinations of features unless explicitly stated otherwise.

The person skilled in the art realizes that the present disclosure by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims.

Hence, it is to be understood that the present disclosure is not limited to the particular component parts of the device described or steps of the methods described as such device and method may vary. It is also to be understood that the terminology used herein is for purpose of describing particular embodiments only and is not intended to be limiting.

### Brief description of the Drawings

The present disclosure will by way of example be described in more detail with reference to the appended drawings, which show example embodiments of the disclosure.
- Fig. 1A: illustrates a drilling system with the drilling drive assembly in the initial position.
- Fig. 1B: illustrates a drilling system with the drilling drive assembly displaced from the initial position
- Fig. 2: illustrates a ski drilling arrangement.
- Fig. 3: illustrates a ski drilling arrangement drilling holes in a ski.
- Fig. 4: illustrates a method for operating a drilling system.

### Detailed description

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided for thoroughness and completeness, and fully convey the scope of the disclosure to the skilled person.

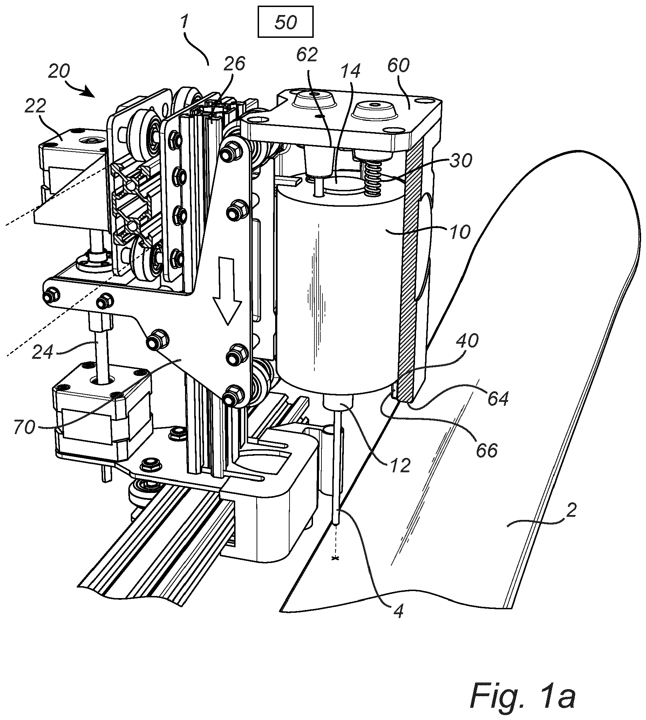

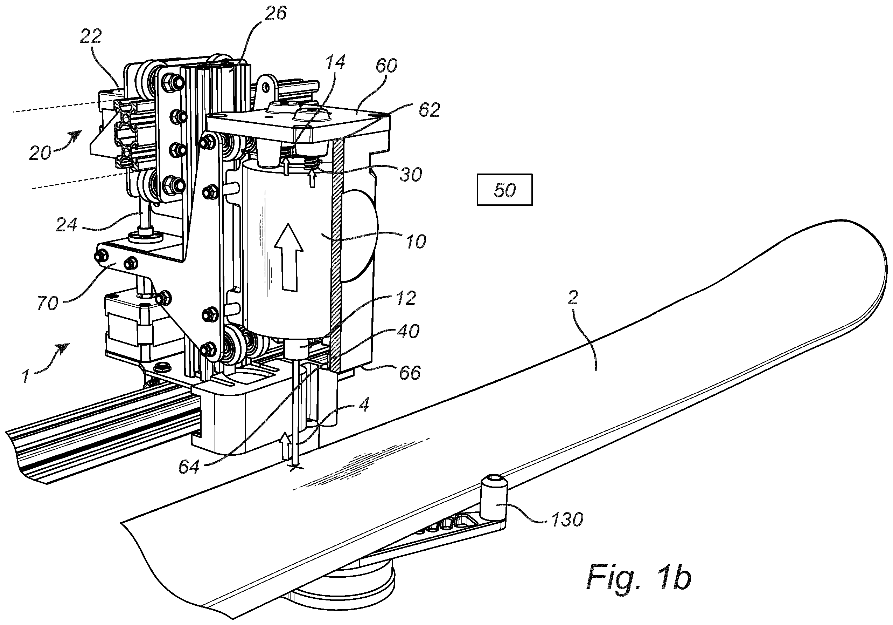

In Figs. 1A and 1B an example of the drilling system 1 for drilling in an object 2 is illustrated. The drilling system 1 comprises a drilling drive assembly 10, a supporting pillar 20, a hollow outer casing 60 and a connection structure 70. The hollow outer casing 60 is arranged around the drilling drive assembly 10. In other words, the hollow outer casing 60 is provided around the drilling drive assembly 10, such that the drilling drive assembly 10 is partly enclosed by the outer casing 60. The connection structure 70 connects the drilling drive assembly 10 via the outer casing 60 to the supporting pillar 20. However, it should be noted that the drilling drive assembly 10 may be connected directly to the supporting pillar 20. The drilling drive assembly 10 is moveably attached to the supporting pillar 20 through the connection structure 70 such that the drilling drive assembly 10 is allowed to move axially along the supporting pillar 20. The supporting pillar 20 comprises a support drive unit 22 which drives the drilling drive assembly 10 along the supporting pillar 20. Thereby, the support drive unit 22 drives the drilling drive assembly 10 towards and away from the object 2 in a primary axial movement. The support drive unit 22 drives the drilling drive assembly 10 between a start position and an end position. The start position may be seen as a resting position where the drilling drive assembly 10 rests when not operated. The end position varies depending on the desired drilling depth. In Fig. 1A the drilling drive assembly 10 is out of operation and located in the start position. In Fig. 1B the drilling drive assembly 10 is in operation and moving towards the end position. As may be seen in Fig. 1A and 1B, in this example the support drive unit 22 comprises a step motor which moves the drilling drive assembly 10 along a lead screw 24 which translates the rotation to a linear axial movement, the primary axial movement, thereby moving the drilling drive assembly 10. Further, an aluminum profile 26 is provided as support for the drilling drive assembly 10. It should be noted that how the primary axial movement is achieved is not essential and any type of motor and configuration may be used to achieve the primary axial movement along the supporting pillar. Figs. 1A and 1B only provides an example.

The drilling drive assembly 10 is attached to a first end 62 of the outer casing 60 by at least one biasing means 30, such that a secondary axial moveability is provided in relation to the outer casing 60. The biasing means 30 forces the drilling drive assembly 10 towards a rim 66 at a second end 64 of the outer casing 60. The drilling drive assembly 10 is supported by the rim 66 in an initial position where the drilling drive assembly 10 is at rest towards the rim. The biasing means 30 is configured to move the drilling drive assembly towards the first end 62 of the outer casing 60 by in the secondary axial movement. When such secondary axial movement occurs, the drilling drive assembly 10 is considered as displaced from the initial position. An illustration of the drilling drive assembly 10 in the initial position may be seen in Fig. 1A and an illustration of when the drilling drive assembly 10 has left the initial position may be seen in Fig. 1B.

The drilling drive assembly 10 further comprises a holder 12 for holding a drill bit 4. The holder protrudes out from the second end 64 of the outer casing 60. The drilling drive assembly 10 further comprises a drive unit 14 configured to rotate the drill bit 4. The drilling drive assembly 10 provides a drilling motion at the drill bit 4, thereby allowing the drill bit 4 to drill holes in the object 2. Drilling may also be seen as a cutting process where the drill bit 4 cuts into the object 2 to obtain a hole 3. When the drilling drive assembly 10 is moved in the primary axial movement the drill bit 4 is moved towards the object 2. When the drill bit 4 touches the object 2 the rotating motion of the drill bit 4 starts to cut a hole in the object 2. When the support drive unit 22 forces the drilling drive assembly 10 a predetermined distance along the supporting pillar 20, the drill bit 4 is supposed to be able to cut into the material of the object 2 in at least the speed at which the primary axial movement is performed. However, as realized by the inventors, a problem may occur when the support drive unit 20 forces the drilling drive assembly 10 downward in the primary axial movement faster than the drill bit 4 is able to drill or cut in the material. To solve this problem the drilling system is provided with said at least one biasing means 30 arranged to bias the drilling drive assembly 10 towards the initial position. The drilling drive assembly 10 is thereby supported to be additionally movable in the secondary axial movement away from the initial position against a biasing force generated by said at least one biasing means 30, and back to the initial position by means of the biasing force. The drilling drive assembly 10 is allowed to move against the biasing force if the drill bit 4 is not able to drill fast enough. In such case, the drilling drive assembly 10 will be forced against the biasing means 30, away from the initial position of the drilling drive assembly 10, until the drill bit 4 has cut into the material to the predetermined depth and the biasing means 30 is able to force the drilling drive assembly 10 back into the initial position. Said at least one biasing means may comprise springs as in Figs. 1A and 1B.

The secondary axial movement is independent from the primary axial movement in such way that the drilling drive assembly 10 may be driven towards the object 2 in the primary axial movement and at the same time away from the object 2 by the secondary axial movement. The primary axial movement is based on the support drive unit 22 and how the support drive unit 22 drive the drilling drive assembly 10 towards the object 2. The secondary axial movement is based on a counteracting force that counteracts the biasing force of the biasing means 30. The counteracting force may be due to that the primary axial movement is faster than the drill bit 4 is able to drill and therefore generated by the object 2. However, it should be noted that the primary axial movement and the secondary axial movement may force the drilling drive assembly 10 in the same direction, towards the object 2. In such case the drilling drive assembly 10 will move faster towards the object 2 than the drilling drive assembly 10 is driven by the support drive unit 22. Such case may occur when the drilling drive assembly 10 has been forced away due to that the drill bit 4 was not able to cut fast enough and then the drill bit 4 starts to cut into the object 2 faster than the drilling drive assembly 10 is forced by the support drive unit 22 towards the object 2 due to the biasing force.

It should be noted that the biasing means 30 may be arranged at any position such that the biasing means 30 forces the drilling drive assembly 10 towards the initial position. As an example, the biasing means 30 may be positioned between the connecting structure 70 and the supporting pillar 20 such that the drilling drive assembly 10 is forced towards the initial position via the connecting structure 70.

The drilling system 1 further comprises a detection means 40 configured to detect if the drilling drive assembly 10 is in the initial position or not. As an example, the detection means 40 may be configured to detect if the drilling drive assembly 10 leaves the rim 66. As a further example, the detection means may be a micro switch which detects if there is a contact between the drilling drive assembly 10 and the outer casing 60. The detection means 40 also detects when the drill bit 4 reaches an upper surface of the object 2. When the drill bit 4 hits the upper surface of the object 2 there will be a small movement of the drilling drive assembly 10 which is possible for the detection means 40 to detect as the drilling drive assembly 10 will move from the initial position. Thereby, a drilling depth may be chosen based on when the drill bit 4 hits the object instead of a predetermined length of the primary axial movement. In other words, the end position of the primary axial movement is set based on the contact made by the drill bit 4 with the upper surface of the object 2. This allows the user to set a length of the primary axial movement based on the desired drilling depth from the upper surface of the object 2 to the end depth of the hole 3.

The drilling system 1 further comprises a control unit 50 connected to the detection means 40 and configured to control the support drive unit 20, such that the drilling of the hole 3 in the object 2 is finished when the drilling drive assembly 10 has reached the end position and is detected in the initial position. If the drilling drive assembly 10 is dislocated from the initial position, the desired depth may not be reached if the drilling drive assembly 10 is not allowed to return to the initial position. Therefore, the control unit 50 is able to secure both that the drilling drive assembly 10 has reached the end position in its primary axial movement and that the drilling drive assembly 10 has not moved from the initial position, i.e., the secondary axial movement is back at the starting position.

One method for ensuring that the correct drilling depth is reached may be to configure the control unit 50 to reset an axial coordinate when the drilling drive assembly 10 first is moved from the initial position. For instance, the drilling depth may be set to 10 millimeters, and the control unit will set the zero point, start position, to when the drilling drive assembly hit the upper surface of the object 2 and then control the support drive unit 20 to drive the drilling drive assembly 10 10 millimeters from that contact point where the new zero point was set. Then the drilling system 1 is provided with both a precise measurement to ensure that the drill bit 4 drills the predetermined depth due to the reset of the zero point and also ensures that the drilling drive assembly 10 is back in the initial position.

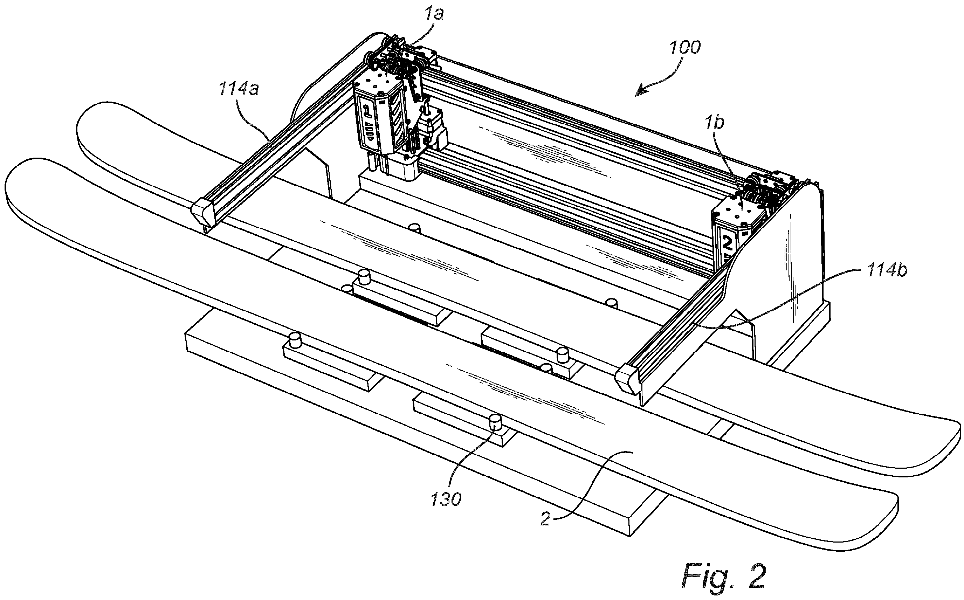

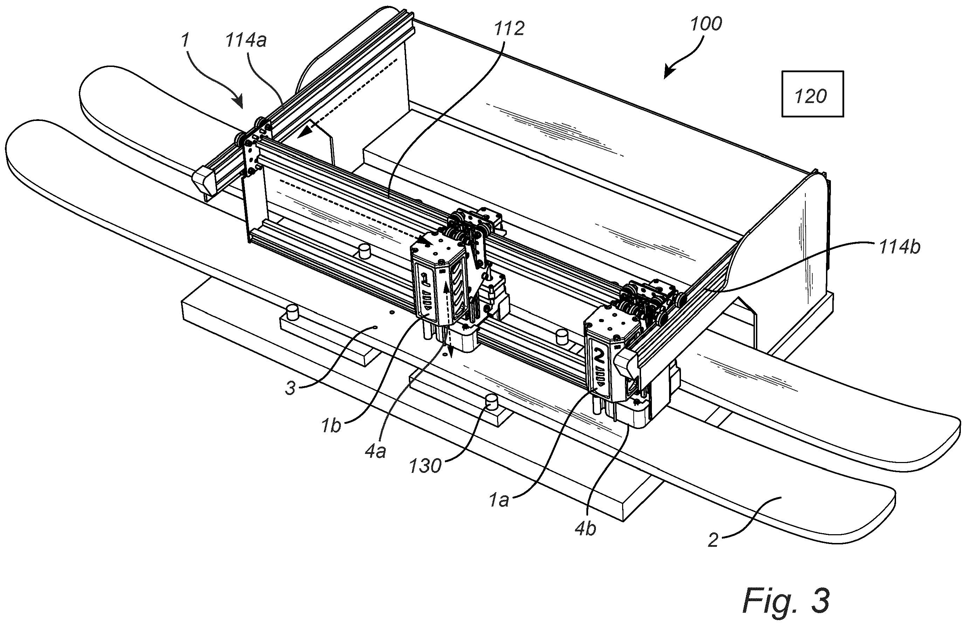

Turning to Figs. 2 and 3 a ski drilling arrangement 100 for drilling holes 3 to mount a binding to a ski or a snowboard is provided. The ski drilling arrangement 100 comprises two drilling systems 1a, 1b as described in connection to Figs. 1A and 1B. In Figs. 2 and 3, a ski is the object 2 in which a hole 3 is to be drilled. The ski drilling arrangement 100 further comprises a support 130 for holding the skis 2. The ski drilling arrangement 100 further comprises a support frame 110. The support frame 110 comprises a first axis 112 to which the supporting pillar 20 of the drilling systems 1a, 1b is connected. The first axis 112 allows the drilling systems 1a, 1b to move in a first dimension. The support frame 110 further comprises two second axes 114a, 114b to which the first axis 112 is connected. The first axis 112 is allowed to move in a second dimension along the two second axes 114a, 114b. The movement of the drilling drive assembly 10 in relation to the supporting pillar 20 is in a third dimension such that the drill bit 4 of each drilling system 1a, 1b may be moved in three different dimensions. The ski drilling arrangement 100 further comprises a control system 120 configured to control the movement of said two drilling systems 1a, 1b in the two dimensions of the supporting frame 110. Thereby, moving each drilling system 1a, 1b along the ski 2 to a desired location for the hole 3.

The drill bits 4 of the drilling systems 1a, 1b may be different from each other. As an example, the diameter of both drill bits may be below 12 millimeters, such as for example, that a drill bit 4a of a first 1a of the drilling systems 1a, 1b is 4.1 millimeters and a drill bit 4b of a second 1b of the drilling systems 1a, 1b is 3.6 millimeters. If the first and the second drilling system 1a, 1b have different drill bits 4a, 4b, the need of changing drill bit for different sizes of holes is reduced. For example, there may be two types of standards for holes when drilling in the ski 2 and by having two drilling systems 1a, 1b with drill bits 4a, 4b that fit for one standard each may reduce the time needed to change between the two different standards. However, it should be noted that the drill bits 4a, 4b may be of the same size as well to allow the drilling systems 1a, 1b to operate simultaneously.

As an example, a ski 2, or a snowboard, is positioned in the ski drilling arrangement 100 to prepare the ski 2 for mounting of bindings. Fig. 2 illustrates when the ski 2 is positioned at the support 130 of the ski drilling arrangement 100 and before the drilling systems 1a, 1b start to operate. It should be noted that in other embodiments the ski drilling arrangement 100 may be arranged to only hold one ski at the time. When the ski 2 has been positioned at the support 130, the operator provides the drilling system with data regarding the binding. This may for example be achieved by scanning an identification tag on the binding. The ski drilling arrangement 100 may, for example, fetch data about the holes to be drilled from a data base by means of the scanned data, and then sets a predetermined depth, i.e., an end position, for each of the drilling drive assemblies 10 of the drilling systems 1a, 1b, in the control unit 50, and sets the positions where the holes 3 should be drilled in the control system 120. As an alternative, the operator may set the predetermined depth and the positions of the holes. In Fig. 3 the drilling systems 1a, 1b have started to operate and they are drilling holes 3. The control system 120 guides the drilling systems 1a, 1b to the correct position. For example, depending on size of the hole the control system 120 may use different drilling systems 1a, 1b for each hole and therefore guides the drilling system 1a, 1b with the correct size of the drill bit to the correct position. When the drilling system 1a, 1b is in the correct position the control unit 50 will start operating the support drive unit 22 to move the drilling drive assembly 10 in the primary axial movement towards the ski 2. It should be noted that the control unit 50 and the control system 120 may be the same system. When the drill bit 4 hits the ski 2, there will be a secondary axial movement which is detected by the detection means 40. When the secondary axial movement is detected, the control unit 50 resets the axial reference system such that the control unit 50 measures the predetermined depth from the zero point of the reset axial reference system. If, during the continued operation, the supporting drive unit 22 drives the drilling drive assembly 10 faster towards the end position than the drill bit 4 is able to cut into the material of the ski 2, the biasing means 30 will allow the drilling drive assembly 10 to move in the secondary axial movement such that the drilling drive assembly 10 moves away from the initial position. Thereby, the drill bit 4 is given more time to cut into the material. After the initial hit, the drilling drive assembly 10 may return to the initial position before leaving the initial position again, or it may continue to distance itself from the initial position. When the drilling drive assembly 10 has reached the end position, the control unit 50 will not determine the hole 3 as finished until the drilling drive assembly 10 has returned to the initial position. Thereby, ensuring that the predetermined depth has been reached.

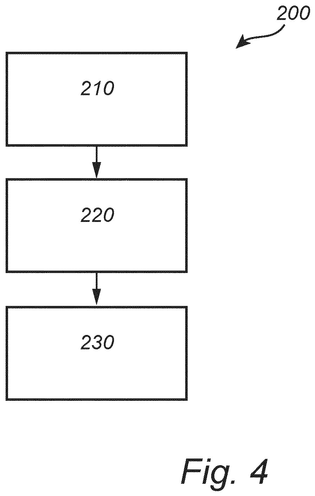

Fig. 4 illustrates a method 200 for operating a drilling system 1. The method 200 comprises moving 210 the drilling drive assembly 10 axially towards the object 2. The method 200 further comprises when hitting the object 2, moving 220 the drilling drive assembly 10 against the biasing force away from an initial position and drilling 230 to a predetermined axial depth into the object 2. The method may further comprise resetting an axial coordinate of the drilling system 1.

The person skilled in the art realizes that the present disclosure by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims.

## Claims

1. A drilling system (1) for drilling a hole in an object (2), the drilling system (1) comprising;
a drilling drive assembly (10) comprising a holder (12) for holding a drill bit (4) and a drive unit (14) for rotating the drill bit (4),
a supporting pillar (20) comprising a support drive unit (22), wherein the drilling drive assembly (10) is moveably attached to the supporting pillar (20), wherein the support drive unit is configured to drive the drilling drive assembly towards and away from the object in a primary axial movement, between a start position and an end position,
at least one biasing means (30) arranged to bias the drilling drive assembly (10) towards an initial position, wherein the drilling drive assembly (10) is supported to be additionally movable in a secondary axial movement away from the initial position against a biasing force generated by said at least one biasing means (30), and back to the initial position by means of the biasing force,
a detection means (40) configured to detect if the drilling drive assembly (10) is in the initial position or not, and to thereby detect that the drill bit reaches an upper surface of the object, and
a control unit (50) connected to the detection means (40) and configured to control the support drive unit (22), such that the drilling of the hole in the object is finished when the drilling drive assembly (10) has reached the end position and is detected in the initial position.

2. The drilling system (1) according to claim 1, wherein
the control unit (50) is configured to reset an axial coordinate when the drilling drive assembly (10) first is moved from the initial position.

3. The drilling system (1) according to claim 2, wherein the detection means (40) comprises a micro switch.

4. The drilling system (1) according to claim 2 or 3, wherein the control unit (50) is programmable such that the control unit (50) is arranged to operate the drilling drive assembly (10) to obtain a preset axial drilling depth.

5. The drilling system (1) according to any one of the preceding claims, wherein the support drive unit (22) comprises a stepper motor or a servo motor.

6. The drilling system (1) according to any one of the preceding claims, wherein said at least one biasing means (30) comprises at least one spring.

7. The drilling system (1) according to any one of the preceding claims, further comprising a hollow outer casing (60) arranged around the drilling drive assembly (10), wherein the drilling drive assembly (10) is moveably attached to the supporting pillar (20) via the outer casing (60),
wherein the drilling drive assembly (10) is attached to a first end (62) of the outer casing (60) by said at least one biasing means (30), such that the secondary axial moveability is provided in relation to the outer casing (60).

8. The drilling system according to claim 7, wherein the secondary axial movement of the drilling drive assembly (10) is detected in relation to the hollow outer casing (60).

9. The drilling system (1) according to claim 7 or 8, wherein the outer casing (60) comprises a rim (66) at a second end (64) from which the holder (12) of the drilling drive assembly (10) protrudes, and
wherein the drilling drive assembly (10) is arranged to be supported by the rim (66) in the initial position and biased towards the rim (66) while being movable towards the first end (62) away from the rim (66).

10. A ski drilling arrangement (100) for drilling holes to mount a binding to a ski or a snowboard, the ski drilling arrangement (100) comprising, at least one drilling system (1) according any one of claim 1 to 9,
a support frame (110) configured to hold the supporting pillar (20) of said at least one drilling system (1) and to together with the supporting pillar (20) allow movement of said at least one drilling system (1) in two dimensions and the movement by the drilling drive assembly (10) is in a third dimension, and
a control system (120) configured to control the movement of said at least one drilling system (1) along the support frame (110).

11. The drilling arrangement (100) according to claim 10, wherein said at least one drilling system (1) comprises a first (1a) and a second (1b) drilling system having different drill bits (4).

12. The drilling arrangement according to claim 11, wherein each drill bit (4) is at most 12 mm.

13. A method (200) for operating a drilling system (1) for drilling a hole in an object (2), the drilling system (1) comprising;
a drilling drive assembly (10) comprising a holder (12) for holding a drill bit (4) and a drive unit (14) for rotating the drill bit (4),
a supporting pillar (20) comprising a support drive unit (22), wherein the drilling drive assembly (10) is moveably attached to the supporting pillar (20), wherein the support drive unit is configured to drive the drilling drive assembly towards and away from the object in a primary axial movement, between a start position and an end position,
at least one biasing means (30) arranged to bias the drilling drive assembly (10) towards an initial position, the method (200) comprising,
moving (210) the drilling drive assembly (10) axially towards the object (2) in the primary axial movement,
when hitting the object (2), allowing (220) the drilling drive assembly (10) to move, in a secondary axial movement, against the biasing force away from an initial position,
drilling (230) to a predetermined axial depth into the object (2), and returning the drilling drive assembly (10) to the initial position by means of the biasing force.

14. The method according to claim 13 further comprising
detecting if the drilling drive assembly (10) is in the initial position or not, and to thereby detect that the drill bit reaches an upper surface of the object, and
resetting an axial coordinate of the drilling system (1) at a first detection of the drilling drive assembly not being in its initial position.
